Europäisches Patentamt

(19) European Patent Office

Office européen des brevets

(11) Publication number: **0 246 604**
**A2**

(12) # EUROPEAN PATENT APPLICATION

(21) Application number: **87107227.8**

(22) Date of filing: **19.05.87**

(51) Int. Cl.³: **G 01 N 15/14**
**G 02 B 1/10**

(30) Priority: **22.05.86 US 865994**

(43) Date of publication of application:
**25.11.87 Bulletin 87/48**

(84) Designated Contracting States:
**BE CH DE ES FR GB IT LI NL SE**

(71) Applicant: **Becton, Dickinson and Company**
**One Becton Drive**
**Franklin Lakes New Jersey 07417-1880(US)**

(72) Inventor: **North, Howard Jr.**
**100 Via Santa Maria**
**Los Gatos California(US)**

(74) Representative: **von Kreisler, Alek, Dipl.-Chem. et al,**
**Deichmannhaus am Hauptbahnhof**
**D-5000 Köln 1(DE)**

(54) Optical coupling gel for flow cytometry apparatuses and the like.

(57) An apparatus for determining one or more optical characteristics comprises a transparent liquid flow chamber and a source for providing a beam of light. A lens is positioned adjacent to the flow chamber for focusing light. A layer of gel at the interface of the flow chamber and the lens provides a refractive index matching medium to facilitate light transmission between the lens and the flow chamber. This apparatus preferably includes at least one light detector so that the detected light may be used to determine one or more optical characteristics.

EP 0 246 604 A2

## OPTICAL COUPLING GEL FOR FLOW CYTOMETRY APPARATUSES AND THE LIKE

### BACKGROUND OF THE INVENTION

1. Field of the Invention. The present invention relates to an optical coupling gel and apparatus for determining one or more optical characteristics, and preferably concerns a flow cytometry apparatus or the like which includes an optical coupling gel for facilitating light transmission through elements of the apparatus.

2. Background Description. Flow analysis of particles has been employed in the determination of different characteristics of individual particles. In particular, flow cytometry apparatuses are used to determine one or more optical characteristics of cells, particles or the like. For example, a liquid sample containing cells is directed through a flow cytometry apparatus in a rapidly moving liquid stream so that each cell passes serially, and substantially one at a time, through a sensing region. As each cell passes through the sensing region, different characteristics of the cell may be determined. If an incident beam of light is directed at the sensing region, the passing cells scatter such light as they pass therethrough. Further, fluorescence is emitted by autofluorescent or labeled cells which have been excited as a result of passing through the excitation energy of the incident light beam. Light scatter and fluorescence related to these passing cells may be detected to thereby provide various information about the properties or characteristics of the cells.

P-886

0246604

In addition to emitted or scattered light, another optical characteristic which may be measured with respect to the cellular analysis is light absorbance. These analyses are most useful in collecting information about cells or particles in areas of research, hematology, immunology and the like. The researcher, for instance, may be interested in determining specific characteristics of individual cells so that the cells may be classified, identified, quantified and perhaps sorted for further investigations or analysis.

Many flow cytometry apparatuses rely on hydrodynamically focused fluid flow through a passageway for determining the specific characteristics of the flowing cells or particles. In the hydrodynamically focused fluid flow, a stream of particles is constrained within a sheath fluid so that the particles are centered at the middle of the stream for optimal performance. Another feature used in many flow cytometry apparatuses is an optically clear or transparent liquid flow chamber, sometimes referred to as a flow cell, through which the ensheathed particle stream is focused. Light is typically directed orthogonally through the flow chamber to intercept the particles in a focal region thereof. Scattered light or fluorescence emitted by the particles may be detected to provide information with respect to each passing particle.

In flow cytometry apparatuses, as well as other apparatuses for determining optical characteristics of particles, cells or the like in which an incident beam of light is relied upon for obtaining information with respect to the particles, one or more lenses are normally involved in focusing the light on the particles flowing within the particle stream. Such lenses may also be relied upon to collect light emitted by or scattered from the particles in a technique known as epi-illumination. One such lens assembly embodied within a particle analyzer instrument, and utilizing a transparent liquid flow chamber, is described in European Patent Number 0068404. In the patented invention, the lens assembly is positioned adjacent the outer surface of the transparent liquid flow chamber with a small amount of glycerol at the interface between lens assembly and flow chamber. This glycerol is a reactive index matching medium provided to facilitate light transmission and minimize light losses.

Even though optical coupling fluids, such as glycerol, have been known and used to improve light transmission between the optical elements of a flow cytometry apparatus, there have been some problems. Existing optical coupling media are fluids which tend to drain away from the optical elements, principally due to gravity, or creep onto adjacent surfaces by surface wetting. Moreover, some fluids evaporate, absorb moisture from the air or act as a nutrient medium for the growth of mold or other organisms. Among other disadvantages, known optical coupling fluids are ill-suited for long term use of a single application of the coupling fluid. Accordingly, improvements are still being sought in the medium which couples optical elements to improve light transmission and minimize light losses between the elements. It is to such an improvement that the present invention is directed.

## SUMMARY OF THE INVENTION

The apparatus of the present invention for measuring one or more optical parameters comprises a transparent liquid flow chamber and means for providing a beam of light. Lens means, including a lens, may be positioned adjacent to the flow chamber for focusing light which enters the flow chamber. This apparatus further comprises means, including another lens, for detecting light so that one or more optical parameters may be measured. A layer of gel is at the interface of the flow chamber and the lens for providing a refractive index matching medium to facilitate light transmission between the flow chamber and the lens.

In a preferred embodiment of the aforementioned aspect of the present invention, a flow cytometry apparatus for determining one or more characteristics of cells or the like in a liquid stream comprises a transparent liquid flow chamber. Means are provided for moving cells, substantially one at a time, in a liquid flow stream through the flow chamber. A source of light is included in the apparatus. Lens means, including a lens, may be positioned adjacent to the flow chamber for focusing light from the light source at a region within the flow chamber through which the cells move. Another lens means, including a lens, are positioned adjacent to the flow chamber for focusing light from the cells within the flow chamber. A layer of optical coupling gel is at the interface of the flow chamber and the lens. This gel has an index of refraction compatible with the indexes of refraction of the transparent flow chamber and the lens to provide optical coupling therebetween for wavelengths of light preferably between 400 and 700 nm. Further included in the apparatus are means for detecting light associated with the moving cells as the cells pass through the flow chamber. Means are included for using the detected light to determine one or more characteristics of the cells.

Another aspect of the present invention is an optical coupling gel having an index of refraction between 1.40 and 1.60 for wavelengths of light between 250 and 750 nm.

In accordance with the principles of the present invention, the optical coupling gel is a significantly improved optical coupling medium for facilitating light transmission through the optical elements and for minimizing light loses therethrough. Most desirably, the optical coupling gel hereof remains in position at the interface between the optical elements to which the gel is applied. The gel does not drain away from the surfaces or evaporate like known optical coupling fluids. Further, the optical coupling gel hereof does not have a tendency to creep onto adjacent optical coupling surfaces and may be formulated so as to retard growth of mold or other organisms. Accordingly, the optical coupling gel of the present invention may be applied and used for lengthy periods without renewal. This optical coupling gel further permits separation of the optical elements as well as adjustability for optimal focusing of light through the elements.

## BRIEF DESCRIPTION OF THE DRAWINGS

Fig. 1 is a schematic illustration of the major functional elements of a flow cytometry apparatus which employs the optical coupling gel of the present invention;

Fig. 2 is an enlarged cross-sectional view schematically illustrating an arrangement of flow chamber and lens assembly with the optical coupling gel at the interface thereof; and

Fig. 3 is an enlarged top plan view schematically illustrating the arrangement of flow chamber, lens assembly and optical coupling gel of Fig. 2.

## DETAILED DESCRIPTION

While this invention is satisfied by embodiments in many different forms, there is shown in the drawings and will herein be described in detail a preferred embodiment of the invention with the understanding that the present disclosure is to be considered as exemplary of the principles of the invention and is not intended to limit the invention to the embodiment illustrated. The scope of the invention will be measured by the appended claims and their equivalents.

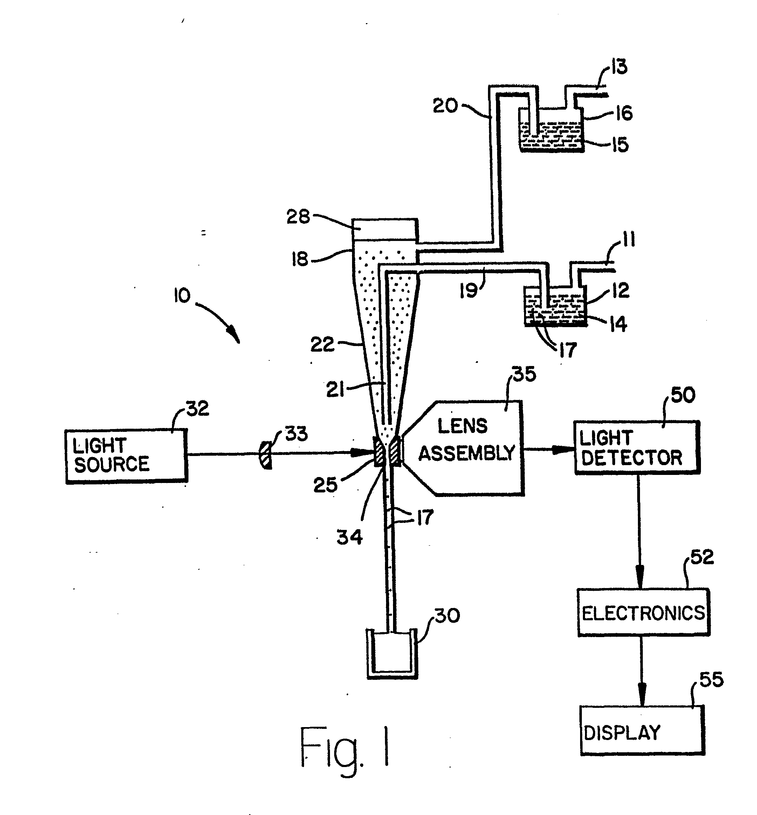

Turning to the drawings and Fig. 1 in particular, there is illustrated a schematic representation of the preferred apparatus 10 embodying flow cytometry principles for measuring one or more

P-886

0246604

optical parameters. It is understood that the present invention is useful in a variety of circumstances related to the determination or measurement of one or more optical parameters particularly of particles or cells flowing in a moving stream. Accordingly, the present invention is useful, for example, in measuring light scatter, fluorescence, absorbance or any other optical parameters suitable for the identification, classification or quantification of particles in a sample medium.

Apparatus 10 includes a storage chamber 12 for holding liquid 14 containing particles 17 in suspension which are to be detected or analyzed in accordance with the present invention. A particle-free sheath liquid 15 is stored in container 16. Both of the aforementioned containers may be appropriately pressurized by means of a gas pressure source or the like (not shown) through lines 11 and 13, respectively. Liquids 14 and 15 are supplied to a nozzle assembly 18 through conduits 19 and 20, respectively. Two nozzles 21 and 22 preferably are included in nozzle assembly 18 and are supplied with liquid from containers 12 and 16, respectively, so that liquid 14 containing the particles in suspension may be trajected in a coaxial column or stream. To this end, particle-containing liquid 14 is injected from nozzle 21 within nozzle 22 into the center of the flowing stream of sheath liquid 15 so that a continuous, hydrodynamically focused, coaxial liquid flow stream results.

Nozzles 21 and 22 direct the coaxial stream of particles 17 and sheath liquid to a transparent, preferably optically clear liquid flow chamber 25. When the coaxial stream of particles and sheath liquid flows through flow chamber 25 the stream containing the particles is continuous. The flow out of chamber 25 may be collected in receptacle 30.

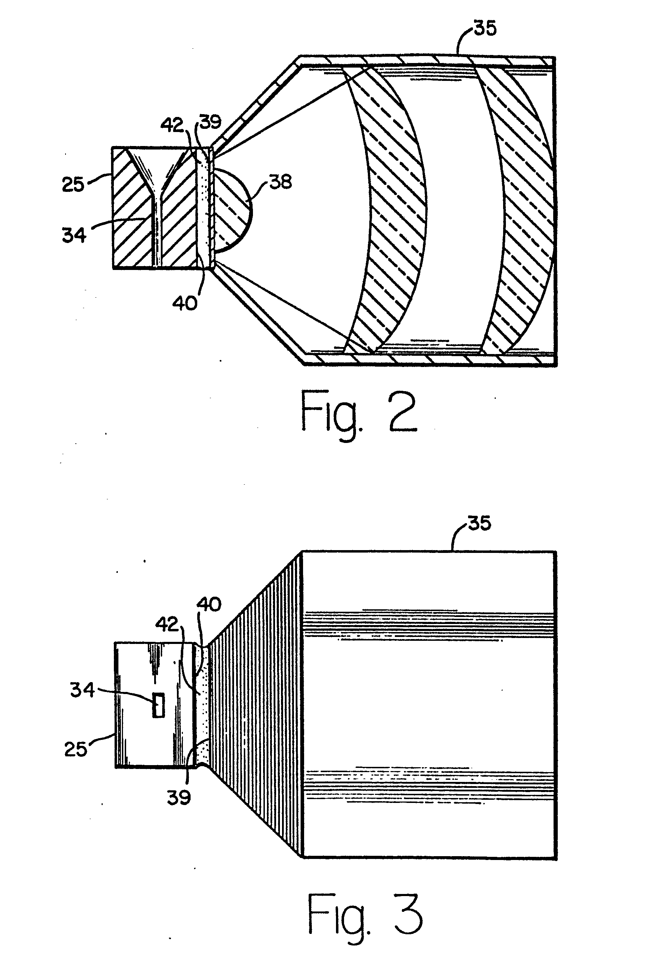

Optical elements of the present invention, including light paths and light direction, are more clearly illustrated in Figs. 2 and 3, taken in conjunction with Fig. 1. It is appreciated that the drawings herein only schematically illustrate the optical aspects of the present invention, so as to emphasize the improvements to which the present invention is directed. For a more detailed explanation of the type of optical components which may be employed in a typical flow cytometry apparatus, reference is made to European Patent No. 0068404.

In accordance with the present invention, light source 32 may typically be a laser for providing coherent light at a singular wavelength, or, perhaps, may be a source of incoherent light, such as a mercury or xenon-arc lamp, which provides light over a range of wavelengths. For purposes of the present invention, wavelengths of light useful for particle or cellular analysis range between 250 and 750 nm, with a preferred range being between 400 and 700 nm. Light from source 32 is directed toward transparent flow chamber 25 tranversely to the direction of the particle flow stream in order to intercept the particles as they pass through a passageway 34 extending through flow chamber 25. Preferably, light from source 32 is directed substantially orthogonally or perpendicularly to the axis representative of the stream of particles 17 and lens assembly 35.

A first lens 33 is preferably provided in the path of the light beam to facilitate the focusing of the light beam on the particles passing through the flow chamber. In the embodiment illustrated in the Figures, another lens assembly 35 is preferably positioned adjacent to flow chamber 25 in order to collect light from particles which have been illuminated by light which has already passed into the light transmissive flow chamber and which has intercepted the stream of particles 17 passing through the flow chamber. This arrangement of lens assembly 35 and flow chamber 25 permits light, emitted by or emanating from the particles under analysis, to be readily focused into the light detector, or detectors, as described below. Focusing of the light, which is emitted by particles or cells, from the flow chamber is desirable especially when fluorescence is being monitored or detected. It is understood, however that the arrangement of the lens assembly with respect to the path of light, for purposes of the present invention, is not a critical part of the invention. For instance, lens assembly 35 may be arranged adjacent to flow chamber 25 in line with light entering the flow chamber so that light from the source may be focused at a focal region within the flow chamber.

Lens assembly 35 may be used to collect light emitted by or scattered from particles 17, and could also be used for epi-illumination. To provide for an optimal focal region, lens assembly 35 is preferably positioned so that the leading lens element 38 within

P-886

0246604

the lens assembly has its forward face 39 positioned adjacent to flow chamber 25. While it may be desirable to have lens face 39 as close as possible and, indeed, in contact with flow chamber 25, due to physical irregularities, non-smooth surfaces, differences of materials or the like, there is frequently an air gap between the leading face of the lens and the flow chamber. One approach to minimize this air gap is to provide a flat surface 40 along the edge of flow chamber 25 which mates with leading face 39 of the lens. Flat face 40 may be formed onto the flow chamber if it is normally a cylindrical element, or flat face 40 may be one side of the flow chamber if the flow chamber is quadrilaterally shaped, as illustrated.

In any event, in the past, known flow cytometry apparatuses have included refractive index matching fluid, such as glycerol, applied to the interface between lens face 39 and flow chamber face 40 to facilitate light transmission between the lens assembly and the flow chamber. As pointed out above, known index matching media have presented some problems. The present invention includes a layer of optical coupling gel 42 at the interface between leading face 39 of the lens and face 40 of the flow chamber. More details about optical coupling gel 42 will be provided hereinafter.

Light scattered, emitted or otherwise associated with the particles, cells or the like passing through illuminated passageway 34 of the flow chamber is then detected by one or more light detectors 50. This light detector may be a well-known photomultiplier

P-886

0246604

device which converts light signals to electrical pulses so that information with respect to the detected light may be electrically analyzed. If light source 32 is an arc lamp, in actual practice light detector 50 might typically be located on the same side of the lens assembly as the light source. For example, an epi-illumination configuration could be employed. On the other hand, if light source 32 is a laser, a low-numerical aperture lens 33 is included between the flow chamber and the laser. A high-numerical aperture lens is desirably included in the lens assembly 35 when fluorescence is being detected. Light detector 50 is in-line with light from source 32 when detecting scattered light. To detect fluorescence, light detector 50 is typically oriented at right angles to the path of incident light. An electrical pulse associated with detected light may be fed to the electronics 52 of the flow cytometry apparatus whereupon information relating thereto may be seen on a display 55, stored in a computer (not shown) or fed back into the apparatus for further analysis.

With respect to the optical coupling gel hereof, and as the term is used herein, it is understood that it differs from a fluid since the gel does not freely flow, but is able to maintain a shape of its own. Accordingly, the gel as that term is used herein represents a colloid system that resembles a solid, jelly-like substance.

As an optical coupling medium, the gel of the present invention preferably has a index of refraction between the refractive index of focusing lens 38 and that of transparent flow chamber 25. Typically, the lens and the flow chamber are made of glass, quartz or plastic; the indexes of refraction of these materials range in between 1.40 and 1.60 and preferably between 1.45 and 1.55. The index of refraction of the gel should be compatible for optically coupling the lens to the flow chamber at useful wavelengths typically relied upon in flow cytometry or like apparatuses. The range of useful wavelengths is usually between 250 and 750 nm, and preferably between 400 and 700 nm.

To permit lens focusing motions without excessive resisting force, it is preferred that the optical coupling gel of the present invention have relatively low initial shear strength. A consistency comparable to that of many commercial toothpastes has been found to be suitable. When applied to the surfaces at the interface of the lens and the flow chamber, it is desirable to completely fill the air gap which may exist between the opposed surfaces. Along these lines, the present optical coupling gel may be deposited as a layer to remain in place between opposed optical surfaces and not migrate onto adjacent surfaces. Typically, the present gel may be applied as a 0.1 mm thick vertical film or layer at the interface between the leading face of the lens and the flow chamber. The thickness of the gel layer may vary as circumstances warrant.

Any suitable formulation of a gel meeting the above-described properties is suitable for the present invention. A practical gel for flow cytometry purposes and useful at the interface between quartz surfaces of the lens and flow chamber has been formulated from a low-vapor pressure, inert silicone oil (Dow Corning 550 fluid). The silicone oil was converted to a gel by the addition of fine particles of silicon dioxide (Degussa Corporation - Aerosil 300). Both the silicone oil and the silicon dioxide particles have an index of refraction of about 1.46 to 1.50 at wavelengths from 400 to 700 nm. It is important that the particles used to provide the gel structure and the oil itself have closely matched refractive indexes. Otherwise, the gel will not be clear and transparent. The gel so formed is preferably pseudo-plastic with very small or non-existent elastic properties. Other gels suitable for the present invention, and meeting the above-described properties, may be formulated from suitable particles, macromolecules, and fluids. Other suitable fluids include some of the tetraorganosilanes such as diphenyldidecylsilane and methyltrioctylsilane as well as some of the tetraalkoxysilanes such as methyl-tris (tri-3 butoxysiloxanyl) silane and tetrakis (2-ethylbutoxy) silane. Further suitable fluids include other phenyl methyl polysiloxane fluids, dimethyl polysiloxane fluids, alkylmethyl polysiloxane fluids, and chlorophenylmethyl polysiloxane fluids. Various fluorosilicone fluids also may be used. Many greases may be formulated from the above fluids by the use of suitable polymers. It is understood that the present invention is not limited to the above-described gel formulations.

Thus, the present invention provides an optical coupling gel suitable for apparatuses which measure one or more optical parameters, such as flow cytometry apparatuses. The optical gel of the present invention overcomes the deficiencies and problems which arise out of use of the known optical coupling fluids. In accordance with the present invention, the gel may be applied and used for extended periods without renewal, and the gel facilitates the adjustability of the optical elements for focusing purposes.

P-886

0246604

## WHAT IS CLAIMED IS:

1. A flow cytometry apparatus for determining one or more characteristics of cells or the like flowing in a liquid stream comprising:

a source for providing a beam of light;

a transparent liquid flow chamber positioned in the beam of light;

means for moving cells, substantially one at a time, in a liquid flow stream through said flow chamber;

means for detecting light associated with said moving cells as the cells pass through said flow chamber;

lens means, including a lens, positioned adjacent to said flow chamber;

a layer of gel at the interface of said flow chamber and said lens, said gel having an index of refraction compatible with said flow chamber and said lens to provide optical coupling therebetween; and

means for using said detected light to determine one or more characteristics of said cells.

2. The apparatus of Claim 1 wherein the index of refraction of said gel is between the indexes of refraction of said flow chamber and said lens.

3. The apparatus of Claim 2 wherein the index of refraction of said gel is between 1.40 and 1.60 for wavelengths of light between 250 and 750 nm.

4. The apparatus of Claim 1 wherein the layer of gel is in contact with the opposing surfaces at the interface of said flow chamber and said lens.

5. The apparatus of Claim 1 wherein said gel is formed from a silicone oil and particles of silicon dioxide.

6. The apparatus of Claim 1 wherein the lens is positioned adjacent to said flow chamber in the light path between the flow chamber and the means for detecting light to focus light therebetween.

7. A flow cytometry apparatus for determining one or more characteristics of particles or the like flowing in a liquid stream comprising:
means for providing a beam of light;
a transparent liquid flow chamber positioned in the beam of light;
means for moving particles, substantially one at a time, in a liquid flow chamber;
means for detecting light associated with said moving particles as the particles pass through said flow chamber;
lens means, including a lens, positioned adjacent to said flow chamber;
a layer of gel at the interface of said flow chamber and said lens for providing an index matching medium to facilitate light transmission between said lens and said flow chamber; and
means for using said detected light to determine one or more characteristics of said particles.

8. An apparatus for measuring one or more optical parameters comprising:
means for providing a beam of light;
means for detecting light so that one or more optical parameters may be measured;

a transparent liquid flow chamber positioned in the light path between said beam providing means and said light detecting means;

lens means, including a lens, positioned adjacent to said flow chamber; and

a layer of gel at the interface of said flow chamber and said lens means for providing an index matching medium to facilitate light transmission between said lens and said flow chamber.

9. A flow cytometry apparatus for determining one or more characteristics of cells or the like in a liquid stream comprising:

a source for providing a beam of light;

a transparent liquid flow chamber positioned in the beam of light;

means for moving cells, substantially one at a time, in a liquid flow stream through said flow chamber;

means for detecting light associated with said moving cells as the cells pass through said flow chamber;

lens means, including a lens, positioned adjacent to said flow chamber in the light path between the flow chamber and the means for detecting light for focusing light from said flow chamber to said means for detecting light;

a layer of optical coupling gel at the interface of said flow chamber and said lens, said gel having an index of refraction between 1.40 and 1.60 for wavelengths of light between 250 and 750 nm to facilitate light transmission between said lens and said flow chamber; and

means for using said detected light to determine one or more characteristics of said cells.

10. The apparatus of Claim 1 wherein said means for detecting light includes a device for detecting fluorescence emitted by the cells passing through light from said source.

11. The apparatus of Claim 1 wherein said means for detecting light includes a device for detecting light scattered by the cells passing through light from said source.

12. The apparatus of Claim 1 wherein said means for using said detected light includes display means for visually displaying one or more characteristics of said cells.

13. An optical coupling gel having an index of refraction between 1.40 and 1.60 for wavelengths of light between 250 and 750 nm.

14. The gel of Claim 13 which is formed from a silicone oil and particles of silicon dioxide.

Fig. 1

Fig. 2

Fig. 3